# EUROPÄISCHE PATENTSCHRIFT

(11) **EP 1 273 841 B1**
(45) Veröffentlichungstag und Bekanntmachung des Hinweises auf die Patenterteilung: **01.02.2006**
(21) Anmeldenummer: 02011915.2
(22) Anmeldetag: 29.05.2002
(51) Int. Cl.: F16L 5/04

(54) **Brandschutzmanschette**
Fire arrester collar
Manchon d'étanchéité au feu

(30) Priorität: 03.07.2001 DE 20110973 U
(43) Veröffentlichungstag der Anmeldung: 08.01.2003
(73) Patentinhaber: Pyro-Fox Brandschutzservice GmbH, 74229 Oedheim (DE)
(72) Erfinder: Züll, Armin, D-74229 Oedheim (DE)
(74) Vertreter: Müller, Hans

(56) Entgegenhaltungen:
- EP-A- 0 900 964
- WO-A-00/68608
- DE-A- 4 325 757
- DE-A- 19 934 902

## Beschreibung

### TECHNISCHES GEBIET

Die Erfindung betrifft eine Brandschutzmanschette. Derartige Brandschutzmanschetten werden benutzt, um Rohre, die durch brandabschnittsbegrenzende Decken oder Wände hindurchführen, im Brandfall zu verschließen.

### STAND DER TECHNIK

Aus der EP 0 711 188 B1 ist ein Rohrschott mit einem um ein Rohr biegbaren Blechmantel bekannt. Auf der Innenseite des Metallmantels ist eine Folie vorhanden, die mit Quellmittel gefüllte Ausstülpungen besitzt. Das Herstellen einer solchen Brandschutzmanschette beinhaltet ein relativ aufwendiges Füllen einer mit taschenartigen Ausstülpungen versehenen Folie mit dem feuerfestes Blähmaterial darstellenden Quellmittel. Der Herstellvorgang einer solchen Brandschutzmanschette ist entsprechend aufwendig.

Eine andere bekannte Brandschutzmanschette besteht aus Schlauchbeuteln, die mit Blähmaterial gefüllt sind. Der Schlauchbeutel wird an dem abzuschottenden Rohr von außen angeklebt. Diese Schlauchbeutel sind, was ihre Herstellung betrifft, mit den vorstehend genannten Ausstülpungen einer Folie technologisch und herstellungsmäßig vergleichbar.

Eine Brandschutzmanschette (40, 62) der gattungsgemäßen Art ist aus der DE 199 34 902 A1 bekannt. Diese Brandschutzmanschette besteht aus einem unter Hitzeeinwirkung ausdehnbaren, feuerfesten Blähmaterial-Band mit einer profilierten Oberfläche. Die Profilierung wird zwecks verbesserter Schalldämmung vorgesehen. Mittels einem Klebeband kann das um das abzuschottende Rohr herumgewickelte Band verschlossen werden.

### DARSTELLUNG DER ERFINDUNG

Ausgehend von diesem vorbekannten Stand der Technik liegt der Erfindung die Aufgabe zu Grunde, eine möglichst universell einsetzbare, wirtschaftlich günstig bereitzustellende Brandschutzmanschette anzugeben.

Diese Erfindung ist durch die Merkmale des Hauptanspruchs gegeben. Sinnvolle Weiterbildungen sind Gegenstand von sich an Anspruch 1 anschließenden weiteren Ansprüchen.

Durch die Verwendung eines feuerfesten Blähmaterials in Form eines streifenförmigen Bandes, das um das jeweilig abzuschottende Rohr herumgelegt werden kann, ist eine besondere Konfektionierung des Blähmaterialsstreifens, wie es mit dem Einfüllen in folienartige Taschen beziehungsweise Beutel im Stand der Technik bekannt ist, nicht erforderlich. Erfindungsgemäß ist ferner vorgesehen, das Blähmaterial-Band als Gusskörper herzustellen und auf dem streifenförmigen Blähmaterial-Band quer ausgerichtete mehr oder weniger stabförmige, rippenförmige Blähmaterialstreifen anzuordnen. Die Blähmaterialkörper und der Flachmaterialstreifen sind einstückig miteinander verbunden und bilden so das Blähmaterial-Gussmaterialband. Die einzelnen Blähmaterialkörper sind dabei mit sich konisch verjüngenden ebenflächigen Seiten ausgebildet. Ein solches Blähmaterial-Band kann platzsparende, kopfstehend aufeinander liegend, verpackt und transportiert werden.

Das Blähmaterial kann entweder allein als solches um das abzuschottende Rohr herumgelegt werden; es kann aber auch ein zusätzlicher äußerer fester Mantel um das Blähmaterial-Band vorgesehen werden. Letzteres bietet sich an, wenn die Abschottungsmaßnahme teilweise oder vollständig aus dem Wand- oder Deckendurchbruch herausschauen soll. So ist es beispielsweise bei einem bereits wiederverschlossenen Durchbruch erforderlich, die zu montierende Brandschutzmanschette nachträglich an dem Durchbruch zu befestigen.

In dem Blähmaterial-Band können Knick- oder Biegekanten ausgebildet sein, um sein Anlegen an einem Rohr möglichst formgetreu zu ermöglichen. Diese Knick- oder Biegekanten können durch materialmäßige Schwächungsbereiche in dem Blähmaterial-Band ausgebildet sein.

Mittels eines Klebebandes können aneinanderstoßende Endbereiche eines solchen, um ein Rohr herumgelegten Blähmaterial-Bandes, zusammengehalten werden. Dabei können auch mehrere Blähmaterialstreifen aneinander gestoßen und durch entsprechend mehrere Klebebänder zusammengehalten werden; es ist also nicht erforderlich, ein Blähmaterial mit einer dem Umfang des Rohres entsprechenden Länge zu verwenden. Abfälle an Blähmaterial sind praktisch nicht vorhanden. Ein solches um ein Rohr herumgelegtes und beispielsweise durch Klebebänder zusammengehaltenes Blähmaterial-Band kann eine vollwertige Brandschutzmanschette darstellen.

Insbesondere wenn die Abschottung außerhalb des Durchbruches platziert werden soll, bietet es sich an, einen äußeren festen Mantel um das Blähmaterial-Band vorzusehen. Ein solcher fester Mantel kann ein metallisches flexibles Band sein. Das flexible Band kann dabei aus zumindest zwei Segmenten, die gelenkig aneinander gefügt werden können, zusammengesetzt sein.

Auf der Innenseite eines solchen Mantels kann das Blähmaterial-Band beziehungsweise mehrere derartige Bandabschnitte angeklebt und dadurch an der Manschette gehalten werden. Es ist allerdings auch möglich, ein solches Band beziehungsweise solche Bandabschnitte auf nach innen abgewinkelte Bereiche des äußeren festen Mantels aufzulagern und dadurch teilweise oder vollständig abzustützen.

Weitere Vorteile und Merkmale der Erfindung sind den in den Ansprüchen ferner angegebenen Merkmalen sowie den nachstehend beschriebenen Ausführungsbeispielen zu entnehmen.

### KURZE BESCHREIBUNG DER ZEICHNUNG

Die Erfindung wird im Folgenden anhand des in Figuren 3, 4, 5, 8, 9 und 10 dargestellten Ausführungsbeispiels näher beschrieben und erläutert. Es zeigen:
- Fig. 1: eine perspektivische Ansicht eines stabförmigen Abschnittes eines Blähmaterial-Bandes.
- Fig. 2: den zu einem Bogen gekrümmten Bandabschnitt nach Fig. 1,
- Fig. 3: eine perspektivische Ansicht eines stabförmigen Abschnittes eines Blähmaterial-Bandes, in einer Ausführungsform nach der Erfindung,
- Fig. 4: den zu einem Bogen gekrümmten Bandabschnitt nach Fig. 3,
- Fig. 5: zwei raumsparend aufeinanderliegende Bandabschnitte gemäß Fig. 3, in ihrem Transportzustand,
- Fig. 6: eine Ansicht eines um ein abzuschottendes Rohr herumgelegten Blähmaterial-Bandes der in Fig. 1 gezeigten Art,
- Fig. 7: einen Querschnitt durch das Rohr nach Fig. 6,
- Fig. 8: ein in einem festen Mantel einsitzendes Blähmaterial-Band als Brandschutzmanschette bei einem Deckendurchbruch, der in einen aufsteigenden Schacht einmündet,
- Fig. 9: eine Brandschutzmanschette ähnlich der von Fig. 8 bei einem Deckendurchbruch, wobei die Brandschutzmanschette aus dem Deckendurchbruch unten etwas herausschaut,
- Fig. 10: eine Brandschutzmanschette mit einem Z-förmigen Mantel, die von unten an einem bereits vermörtelten Deckendurchbruch befestigt worden ist.

### WEGE ZUM AUSFÜHREN DER ERFINDUNG

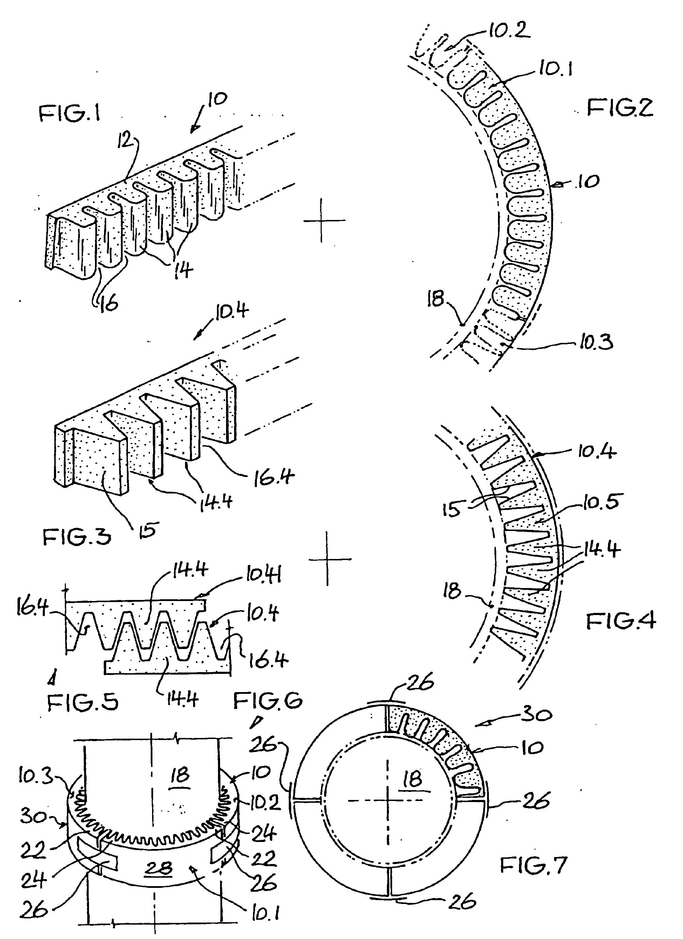

In Fig. 1 ist ein Blähmaterial-Band 10 flachgestreckt dargestellt. Es besteht aus einem Flachmaterialstreifen 12, auf dem quaderförmige einzelne stabförmige Körper 14, die ausgerundete Kanten besitzen, vorhanden sind. Die Körper 14 sind einstückig mit dem Streifen 12 verbunden und bilden das einteilige Band 10. Das Band 10 wird in einer entsprechenden Gießform als Gußteil hergestellt.

Die zwischen den einzelnen Körpern 14 vorhandenen Querrillen 16 ermöglichen es, das Band 10 in eine gekrümmte Bogenform zu verbiegen, wie es beispielsweise in Fig. 2 dargestellt ist. Gestrichelt ist die Außenkontur eines Rohres 18 dargestellt, um das ein solches gekrümmtes Band mit einem ersten Bandabschnitt 10.1 teilweise herumgelegt ist. Die Körper 14 liegen dabei an dem Rohr 18 an. Gestrichelt sind zwei weitere solche gekrümmte Bandabschnitte 10.2, 10.3 dargestellt, so dass das Rohr 18 vollständig mit Abschnitten von solchen Bändern 10 umgeben werden kann.

Das gemäss der Erfindung in Fig. 3 dargestellte Blähmaterial-Band 10.4 unterscheidet sich von dem vorstehenden Band 10 lediglich darin, dass seine einzelnen Körper 14.4 konisch sich verjüngend, mit ebenflächigen Seiten 15 ausgebildet sind. Die einzelnen Körper 14.4 haben die gleiche Form wie die zwischen den Körpern vorhandenen Querrillen 16.4. Ein solches Band 10.4 läßt sich in gleicher Weise wie das Band 10 in einem bogenförmigen Bandabschnitt 10.5 um ein Rohr 18 herumlegen (Fig. 4), wie das in Fig. 2 bereits beispielhaft gezeigt ist. Zusätzlich dazu lässt sich das Band 10.4 aber besonders raumsparend transportieren, wie Fig. 5 verdeutlicht. Auf ein unteres flachliegendes Band 10.4 kann ein um 180° (Grad) herumgedrehtes Band 10.4 so aufgelagert werden, dass die Körper des einen Bandes sich in die Querrillen 16.4 des jeweils anderen Bandes einfügen lassen.

In Fig. 6 ist ein Band 10 perspektivisch dargestellt. Es umhüllt das Rohr 18 und besteht beispielsweise aus mehreren Abschnitten 10.1, 10.2 und 10.3. Die jeweiligen aneinanderstoßenden Endbereiche 22, 24 von aneinanderstoßenden Bandabschnitten 10.1, 10.2, 10.3 sind durch ein außen angeklebtes Klebeband 26 ausreichend fest miteinander verbunden. Das in Fig. 6 und 7 dargestellte Blähmaterialband 10 mit seiner aus Montagegründen endseitigen Verbindung über Klebebänder 26 stellt eine voll funktionstüchtige Brandschutzmanschette 30 dar. Um zu verhindern, dass im Brandfall das Blähmaterial und damit das Band 10 sich nach Außen hin ausdehnt, wird eine solche Brandschutzmanschette 30 mit ihrer Außenseite 28 vollständig in einem Wand- oder Deckendurchbruch platziert sein. Die Ausmörtelung oder Ausbetonierung des Durchbruches verhindert dann ein Ausdehnen des Bandes 10 in radialer Richtung vom Rohr 18 weg.

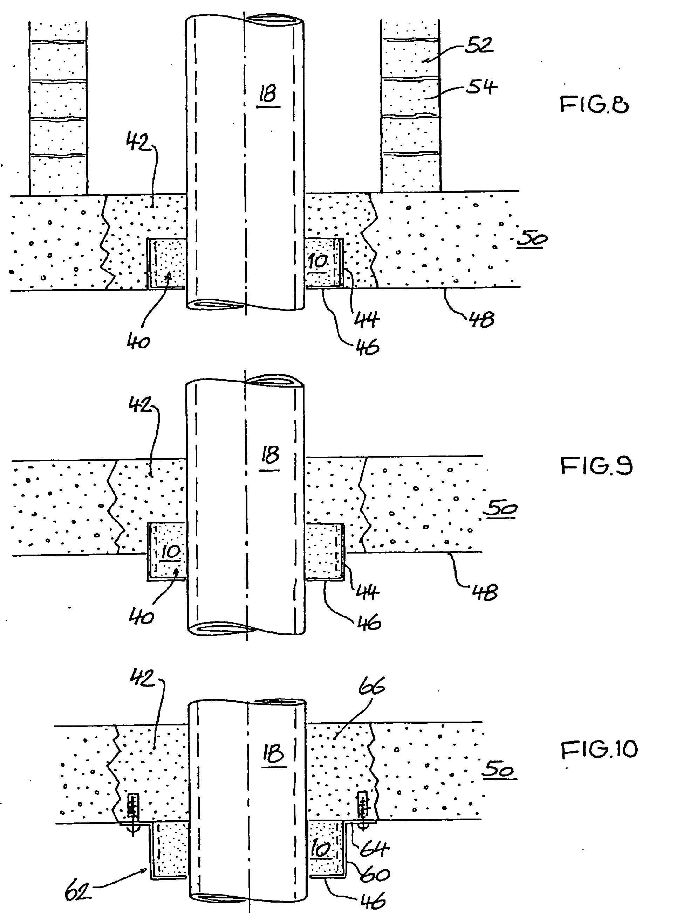

Bei der Darstellung gemäß Fig. 8 ist eine Brandschutzmanschette 40 in einem Deckendurchbruch 42 vorhanden. Es ist wiederum ein Blähmaterialband 10 vorhanden, das außen von einem flexiblen Mantel 44 umgeben ist. An dem Mantel 44 ist das Band 10 angeklebt. Der Mantel 44 besitzt an seinem unteren Rand eine nach Innen umgekantete Umbiegung 46, auf der das Band 10 aufruht. Die Umbiegung 46 fluchtet in etwa mit der Unterseite 48 der Decke 50. Der Durchbruch 42 verschließt von unten einen Schacht 52. Der Schachtmantel 54 dieses Schachtes 52 sitzt auf der Decke 50 von oben auf. Bei einer solchen Situation kann die Brandschutzmanschette 40 vollständig in dem Deckendurchbruch 42 platziert werden.

Im Gegensatz dazu ist bei einem bloßen Deckendurchbruch 42, ohne anschließendem Schacht 52 (Fig. 9), eine demgegenüber verstärkte, schnellere Hitzezuführung zu dem Blähmaterial 10 erforderlich, um ein - gegenüber der Situation gemäß Fig. 8 - zeitlich früheres Ausdehnen des Blähmaterials und damit schnelleres Verschließen des Rohres 18 zu erreichen. Die Brandschutzmanschette 40 (Fig. 9) wird daher so eingebaut, dass sie teilweise nach unten aus dem Deckendurchbruch 42 herausschaut. Die Angriffsfläche für Hitze ist bei der Brandschutzmanschette 40 gemäß Fig. 9 größer als bei der Brandschutzmanschette 40 gemäß Fig. 8. Im übrigen entspricht die Brandschutzmanschette 40 der Fig. 8 der Brandschutzmanschette der Fig. 9, was ihren Aufbau entspricht.

In Fig. 10 ist ein Blähmaterial-Band 10 auf der Innenseite eines festen Mantels vorhanden. Der Mantel 60 dieser Brandschutzmanschette 62 besitzt einen Z-förmigen Querschnitt. Der nach außen gerichtete, obere Schenkel 64 ist an der Unterseite einer Ausmörtelung 66 angedübelt, mit der ein Deckendurchbruch 42 bereits wieder, vor Anbringung der Abschottungsmaßnahme, verschlossen worden ist. Die Brandschutzmanschette 62 liegt also unterhalb des Deckendurchbruchs 42 an dem durch den Deckendurchbruch 42 hindurch geführten Rohr 18 an. Auf der unteren Umbiegung 46 des Z-förmigen Mantels ruht wiederrum das Blähmaterial-Band 10 auf, sowie das bei der Brandschutzmanschette 40 ebenfalls der Fall ist.

Der äußere feste Mantel der Brandschutzmanschette 40, 62 kann aus zumindest zwei miteinander verriegelbaren Segmenten zusammengesetzt sein oder kann ein Metallband beinhalten, das mit einem flexiblen Band oder mit einem Hakenverschluß endseitig zusammengehalten wird.

Vorteilhaft bei der vorstehenden Abschottungsmaßnahme ist die Tatsache, dass das verwendete Blähmaterial in Stangenform oder als Wickelkörper zur Verfügung gestellt werden kann.

## Patentansprüche

1. Brandschutzmanschette (40, 62) zum Abschotten von durch Wände oder Decken (50) hindurchführenden Rohren (18),
- mit einem unter Hitzeeinwirkung ausdehnbaren, feuerfesten Blähmaterial, welches als ein um ein Rohr (18) herumlegbares, streifenförmiges Blähmaterial-Band (10) mit einem Flachmaterialstreifen (12) ausgebildet ist, auf dem (12) quer angeordnete, stabförmige Blähmaterialkörper (14.4) vorhanden sind, wobei
- der Flachmaterialstreifen (12) und die stabförmigen Körper (14.4) als einteilig miteinander verbundener Blähmaterial-Gusskörper vorhanden sind,
- **dadurch gekennzeichnet, dass**
- die einzelnen Blähmaterialkörper (14.4) mit sich konisch verjüngenden ebenflächigen Seiten (15) ausgebildet sind, so dass die Körper (14.4) eines ersten Flachmaterialstreifens sich in die Querrillen eines um 180° herumgedrehten zweiten Flachmaterialstreifens einfügen lassen.

2. Brandschutzmanschette nach Anspruch 1,
- **dadurch gekennzeichnet, dass**
- die Blähmaterialkörper (14.4) die gleiche Querschnittsform haben wie die zwischen den einzelnen Blähmaterialkörpern (14.4) vorhandenen Querrillen (16.4).

3. Brandschutzmanschette nach einem der vorstehenden Ansprüche,
- **dadurch gekennzeichnet, dass**
- im Blähmaterial-Band (10) Knick- oder Biegekanten vorhanden sind.

4. Brandschutzmanschette nach Anspruch 3,
- **dadurch gekennzeichnet, dass**
- materialmäßige Schwächungsbereiche (16.4) als Knick- oder Biegelinien vorhanden sind.

5. Brandschutzmanschette nach einem der vorstehenden Ansprüche,
- **dadurch gekennzeichnet, dass**
- aneinanderstoßende Endbereiche (22, 24) eines um ein Rohr (18) herumgelegten Blähmaterial-Bandes (10) durch ein Klebeband (26) zusammenzuhalten sind.

6. Brandschutzmanschette nach einem der vorstehenden Ansprüche,
- **dadurch gekennzeichnet, dass**
- ein äußerer fester Mantel (44, 60) für das Blähmaterial-Band (10) vorhanden ist.

7. Brandschutzmanschette nach Anspruch 6,
- **dadurch gekennzeichnet, dass**
- der feste Mantel ein metallisches, flexibles Band ist.

8. Brandschutzmanschette nach Anspruch 6 oder 7,
- **dadurch gekennzeichnet, dass**
- der feste Mantel (44, 60) eine aus zumindest zwei Segmenten zusammengesetzte Manschette ist.

9. Brandschutzmanschette nach Anspruch 1,
- **dadurch gekennzeichnet, dass**
- nach innen abgewinkelte Bandbereiche (46) an dem Mantel (60) vorhanden sind.

10. Brandschutzmanschette nach einem der Ansprüche 6 bis 9,
- **dadurch gekennzeichnet, dass**
- das Blähmaterial-Band (10) an dem Mantel (44, 60) angeklebt ist.

## Claims

1. Fire protection sleeve (40, 62) for sealing pipes (18) led through walls or ceilings (50),
- with a fireproof intumescent material, which can expand when exposed to heat and is formed as a strip-shaped intumescent material band (10) which can be laid around a pipe (18) and comprises a flat material strip (12), on which (12) there are transversely arranged, bar-shaped intumescent material bodies (14.4),
- the flat material strip (12) and the bar-shaped bodies (14.4) taking the form of an integrally bonded together casting of intumescent material,
**characterized in that**
- the individual intumescent material bodies (14.4) are formed with conically tapering planar sides (15), so that the bodies (14.4) of a first flat material strip allow themselves to be inserted into the transverse grooves of a second flat material strip turned over by 180°.

2. Fire protection sleeve according to Claim 1, **characterized in that**
- the intumescent material bodies (14.4) have the same cross-sectional shape as the transverse grooves (16.4) present between the individual intumescent material bodies (14.4).

3. Fire protection sleeve according to one of the preceding claims, **characterized in that**
- in the intumescent material band (10) there are folding or bending edges.

4. Fire protection sleeve according to Claim 3, **characterized in that**
- there are regions of material weakening (16.4) as folding or bending lines.

5. Fire protection sleeve according to one of the preceding claims, **characterized in that**
- mutually abutting end regions (22, 24) of an intumescent material band (10) laid around a pipe (18) are held together by an adhesive tape (26).

6. Fire protection sleeve according to one of the preceding claims, **characterized in that**
- there is an outer solid casing (44, 60) for the intumescent material band (10).

7. Fire protection sleeve according to Claim 6, **characterized in that**
- the solid casing is a metallic, flexible band.

8. Fire protection sleeve according to Claim 6 or 7, **characterized in that**
- the solid casing (44, 60) is a sleeve composed of at least two segments.

9. Fire protection sleeve according to Claim 1, **characterized in that**
- on the casing (60) there are inwardly angled-away band regions (46).

10. Fire protection sleeve according to one of Claims 6 to 9, **characterized in that**
- the intumescent material band (10) is adhesively attached to the casing (44, 60).

## Revendications

1. Manchon pare-feu (40, 62) pour isoler des tuyaux (18) à faire passer à travers des murs ou des plafonds (50),
- avec un matériau expansible réfractaire, dilatable sous l'action de la chaleur, qui est réalisé sous la forme d'une bande (10) de matériau expansible en forme de ruban, pouvant être posée tout autour d'un tuyau (18) et comprenant un ruban (12) de matériau plat sur lequel sont présents des corps de matériau expansible en forme de bâtonnets (14.4) disposés transversalement,
- sachant que le ruban (12) de matériau plat et les corps en forme de bâtonnets (14.4) sont présents sous la forme de corps moulés de matériau expansible mutuellement reliés d'un seul tenant,
**caractérisé en ce que**
- les corps individuels (14.4) de matériau expansible sont réalisés avec des côtés (15) à surface plane qui se rétrécissent coniquement, de sorte que les corps (14.4) d'un premier ruban de matériau plat peuvent être insérés dans les rainures transversales d'un deuxième ruban de matériau plat retourné à 180°.

2. Manchon pare-feu selon la revendication 1, **caractérisé en ce que** les corps (14.4) de matériau expansible ont la même forme de section que les rainures transversales (16.4) présentes entre les corps individuels (14.4) de matériau expansible.

3. Manchon pare-feu selon l'une des revendications précédentes, **caractérisé en ce que** des arêtes d'inflexion ou de pliage sont présentes dans la bande (10) de matériau expansible.

4. Manchon pare-feu selon la revendication 3, **caractérisé en ce que** des régions (16.4) d'affaiblissement de matière sont présentes comme lignes d'inflexion ou de pliage.

5. Manchon pare-feu selon l'une des revendications précédentes, **caractérisé en ce que** des régions terminales (22, 24) en aboutement mutuel d'une bande (10) de matériau expansible posée tout autour d'un tuyau (18) sont solidarisées par une bande adhésive (26).

6. Manchon pare-feu selon l'une des revendications précédentes, **caractérisé en ce qu'**une enveloppe extérieure ferme (44, 60) est présente pour la bande (10) de matériau expansible.

7. Manchon pare-feu selon la revendication 6, **caractérisé en ce que** l'enveloppe ferme est une bande métallique flexible.

8. Manchon pare-feu selon la revendication 6 ou 7, **caractérisé en ce que** l'enveloppe ferme (44, 60) est un manchon composé d'au moins deux segments.

9. Manchon pare-feu selon la revendication 1, **caractérisé en ce que** des régions de bande (46) recourbées vers l'intérieur sont présentes sur l'enveloppe (60).

10. Manchon pare-feu selon l'une des revendications 6 à 9, **caractérisé en ce que** la bande (10) de matériau expansible est collée sur l'enveloppe (44, 60).
